# EUROPÄISCHE PATENTSCHRIFT

(11) **EP 3 494 330 B1**
(45) Veröffentlichungstag und Bekanntmachung des Hinweises auf die Patenterteilung: **01.06.2022**
(21) Anmeldenummer: 17749422.6
(22) Anmeldetag: 31.07.2017
(51) Int. Cl.: F16H 61/12, F16H 61/688

(54) **HYDRAULIKSYSTEM FÜR EIN AUTOMATIKGETRIEBE EINES KRAFTFAHRZEUGS**
HYDRAULIC SYSTEM FOR AN AUTOMATIC GEARBOX OF A MOTOR VEHICLE
SYSTÈME HYDRAULIQUE POUR UNE BOÎTE DE VITESSES AUTOMATIQUE D'UN VÉHICULE AUTOMOBILE

(30) Priorität: 03.08.2016 DE 102016214357
(43) Veröffentlichungstag der Anmeldung: 12.06.2019
(73) Patentinhaber: Audi AG, 85045 Ingolstadt (DE)
(72) Erfinder: WEINHARDT, Mathias, 85051 Ingolstadt (DE)
(86) Internationale Anmeldenummer: PCT/EP2017/069331
(87) Internationale Veröffentlichungsnummer: WO 2018/024678

(56) Entgegenhaltungen:
- DE-A1- 10 204 183
- DE-A1-102011 100 809
- JP-A- 2010 084 870
- US-A1- 2008 176 709

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Gangsteller zum Einlegen der Gänge werden über Hydraulikzylinder betätigt, die hydraulisch über ein Hydrauliksystem ansteuerbar sind.

Aus der DE 10 2014 003 083 A1 ist ein Hydrauliksystem bekannt, das einen Druckspeicher zur Bereitstellung eines Speicherdruckes im Hydrauliksystem aufweist. In einem, vom Druckspeicher zum Kupplungs-Hydraulikzylinder führenden Kupplungspfad ist ein von einer elektronischen Steuereinheit ansteuerbares Kupplungsventil angeordnet, mit dem der am Kupplungs-Hydraulikzylinder anliegende Hydraulikdruck einstellbar ist. Der Steuereinheit ist bevorzugt ein Drucksensor zugeordnet (DE 10 2013 003 894 A1), mit dem der am Kupplungs-Hydraulikzylinder anliegende Hydraulikdruck erfassbar ist. Zudem weist das Hydrauliksystem eine Lade-Hydraulikpumpe auf, die in einem Ladevorgang Hydraulikflüssigkeit in das Hydrauliksystem fördert, um den Speicherdruck zu erhöhen.

Wie oben erwähnt, ist im Kupplungspfad ein von der elektronischen Steuereinheit ansteuerbares Kupplungsventil angeordnet, mit dem ein am Kupplungs-Hydraulikzylinder anliegender Hydraulikdruck einstellbar ist. Das Kupplungsventil ist zwischen einer Schließstellung und einer Durchflussstellung verstellbar. Bei einer Fehlfunktion des Kupplungsventils besteht die Gefahr, dass das Kupplungsventil nicht mehr in seine Schließstellung bringbar ist, so dass dauerhaft ein hoher Hydraulikdruck am Kupplungs-Hydraulikzylinder anliegt. Für einen solchen Fehlerfall ist aus Redundanzgründen ein zusätzliches, von der Steuereinheit ansteuerbares Sicherheitsventil bereitzustellen. Das Sicherheitsventil kann stromauf des Kupplungsventils vorgesehen sein und in seiner Schließstellung den Kupplungspfad vom Druckspeicher druckentkoppeln. In der Durchflussstellung des Sicherheitsventils ist der Kupplungspfad mit dem Speicherdruck druckbeaufschlagbar.

Aus der DE 10 2011 100 809 A1 ist ein gattungsgemäßes Kupplungsgetriebe mit Sicherheitsventilanordnung bekannt. Die DE 102 04 183 A1 offenbart ein Verfahren zum Ermitteln einer fehlerbehafteten Ansteuerung eines über einen Stellantrieb angetriebenen Bauteils. Aus der US 2008/176709 A1 sind ein Verfahren und eine Vorrichtung zur Überwachung von Bauteilen eines Hydraulikkreislaufes eines elektromechanischen Getriebes bekannt. Aus der JP 20 10-084 870 A ist ein Hvdrauliksystem für ein Automatikgetriebe bekannt, in dem ein Diagnosemodul inteqriert ist, mit dem eine Sicherheitsventil-Diaqnose durchführbar ist

Die Aufgabe der Erfindung besteht darin, ein Hydrauliksystem bereitzustellen, bei dem mit einem reduzierten sensortechnischen Aufwand die Betriebssicherheit des Druckspeichers gewährleistet werden kann.

Die Aufgabe ist durch die Merkmale des Patentanspruches 1 gelöst. Bevorzugte Weiterbildungen der Erfindung sind in den Unteransprüchen offenbart.

Erfindungsgemäß weist die Steuereinheit ein Diagnosemodul auf, mit dem eine Sicherheitsventil-Diagnose durchführbar ist, um eine fehlerfreie Funktion des Sicherheitsventils zu gewährleisten. Bei der Sicherheitsventil-Diagnose wird das Sicherheitsventil zu einem Diagnose-Startpunkt von seiner Durchflussstellung in die Schließstellung geschaltet, wodurch sich eine Ist-Druckabnahme stromab des Sicherheitsventils einstellt. Das Diagnosemodul weist eine Auswerteeinheit auf, die die Ist-Druckabnahme mit einer Soll-Druckabnahme vergleicht und bei Vorliegen einer signifikanten Abweichung einen Fehlerfall erkennt. Ein solcher Fehlerfall kann sich beispielhaft aufgrund von Schmutz-Ablagerungen ergeben, infolgedessen das Sicherheitsventil nicht mehr verstellbar ist.

Zur Erfassung der Ist-Druckabnahme ist der elektronischen Steuereinheit ein entsprechender Drucksensor zugeordnet. Hierfür wird der Drucksensor zur Erfassung eines am Kupplungs-Hydraulikzylinder anliegenden Hydraulikdruckes genutzt werden. Im normalen Fahrbetrieb erfüllt der Drucksensor eine Sicherheitsfunktion, bei der überwacht wird, ob die Kupplung drucklos bzw. druckbeaufschlagt ist. Während der Sicherheitsventil-Diagnose erfüllt dagegen der Drucksensor in Doppelfunktion die Erfassung des oben erwähnten Ist-Druckabfalles stromab des Sicherheitsventils. Der Drucksensor ist zwischen dem Kupplungsventil und dem Kupplungs-Hydraulikzylinder angeordnet Zur einwandfreien Erfassung der Ist-Druckabnahme wird das Kupplungsventil um einen Zeitversatz vor dem oben erwähnten Diagnose-Startzeitpunkt in seine Durchflussstellung verstellt.

Zudem ist es im Hinblick auf eine fehlerfreie Erfassung der Ist-Druckabnahme bevorzugt, wenn die Hydraulikpumpe während der Sicherheitsventil-Diagnose im Ladebetrieb ist, das heißt mit einer Drehzahl angesteuert ist, um im Hochdruckkreislauf einen ausreichend großen Speicherdruck zu gewährleisten. Außerdem ist es bevorzugt, wenn während der Sicherheitsventil-Diagnose die Gangsteller-Hydraulikzylinder vom Hochdruckkreislauf druckentkoppelt sind.

Der Ist-Speicherdruck im Hochdruckkreislauf ist während des Normalbetriebs und bevorzugt auch während der Sicherheitsventil-Diagnose zwischen einem oberen und einem unteren Druckschwellwert geregelt. Aus Kostengründen kann der vom Drucksensor maximal erfassbare Messbereich außerhalb, das heißt unterhalb des Ist-Speicherdruckes liegen. In diesem Fall wird während des oben erwähnten Zeitversatzes nicht der tatsächliche, im Kupplungs-Hydraulikzylinder anliegende Speicherdruck, sondern vielmehr ein oberer Grenz-Druck des Messbereiches aus dem Drucksensor ausgelesen. Bei der obigen Konstellation ist also die vom Drucksensor erfassbare Ist-Druckabnahme, bei der der Kupplungsdruck bis auf den Umgebungsdruck fällt, identisch mit dem maximalen Drucksensor-Messbereich.

Die Erfindung und ihre vorteilhaften Aus- und Weiterbildungen sowie deren Vorteile werden nachfolgend anhand von Zeichnungen näher erläutert.

Es zeigen:
- Figur 1: ein Blockschaltdiagramm eines Doppelkupplungsgetriebes für ein Kraftfahrzeug mit sieben Vorwärtsgängen sowie einem Rückwärtsgang;
- Figur 2a und 2b: ein Hydrauliksystem eines Doppelkupplungsgetriebes in einem Blockschaltbild sowie grob schematisch den Aufbau eines Druckspeichers;
- Figur 3: in einem Blockschaltbild die Programmbausteine zur Druckspeicher- und Kupplungspfad-Diagnose in einem Diagnosemodul; und
- Figur 4: Diagramme, die die Druckspeicher- und Kupplungspfad-Diagnose veranschaulichen;
- Figur 5: in einem Blockschaltbild die zur Gangstellerpfad-Diagnose erforderlichen Programmbausteine in dem Diagnosemodul;
- Figur 6: Diagramme, die die Gangstellerpfad-Diagnose veranschaulichen;
- Figur 7: in einem Blockschaltbild die zur Speichervolumen-Diagnose erforderlichen Programmbausteine in dem Diagnosemodul;
- Figur 8: Diagramme, die die Speichervolumen-Diagnose veranschaulichen;
- Figur 9: in einem Blockschaltdiagramm die zur Umschaltzeitpunkt-Diagnose erforderlichen Programmbausteine in dem Diagnosemodul;
- Figur 10: in einem Blockschaltbild die zur Ventilspreizung-Diagnose erforderlichen Programmbausteine in dem Diagnosemodul;
- Figur 11: Diagramme, die die zeitlichen Verläufe während der Umschaltzeitpunkt-Diagnose und während der Ventilspreizung-Diagnose veranschaulichen;
- Figur 12: in einem Blockschaltdiagramm die zur Sicherheitsventil-Diagnose erforderlichen Programmbausteine in dem Diagnosemodul;
- Figur 13: Diagramme, die die zeitlichen Verläufe relevanter Parameter während der Sicherheitsventil-Diagnose veranschaulichen;
- Figur 14: in einem Blockschaltdiagramm die zur Fördervolumenstrom-Diagnose erforderlichen Programmbausteine in dem Diagnosemodul;
- Figur 15: Diagramme, die die zeitlichen Verläufe während der Fördervolumenstrom-Diagnose veranschaulichen; und
- Figur 16: eine Analyseeinheit, in die die in den Fehlerspeichern generierten Fehlersignale auslesbar sind.

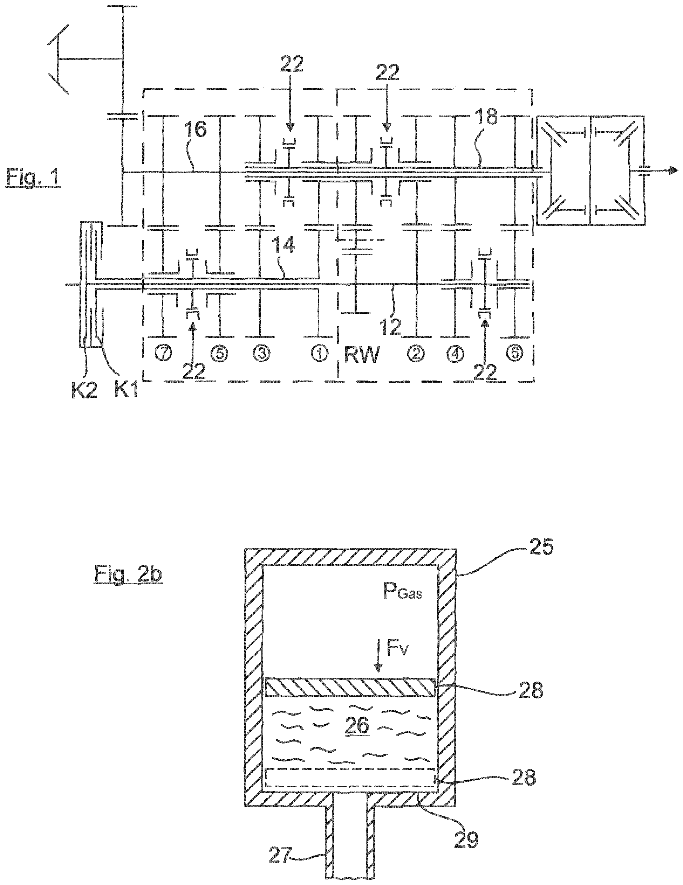

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. Die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über hydraulisch betätigbare Gangsteller schaltbare Loszahnräder auf. Die Gangsteller können beispielhaft Doppelsynchronkupplungen sein, die jeweils aus einer Neutralstellung heraus zwei benachbarte Loszahnräder schalten können.

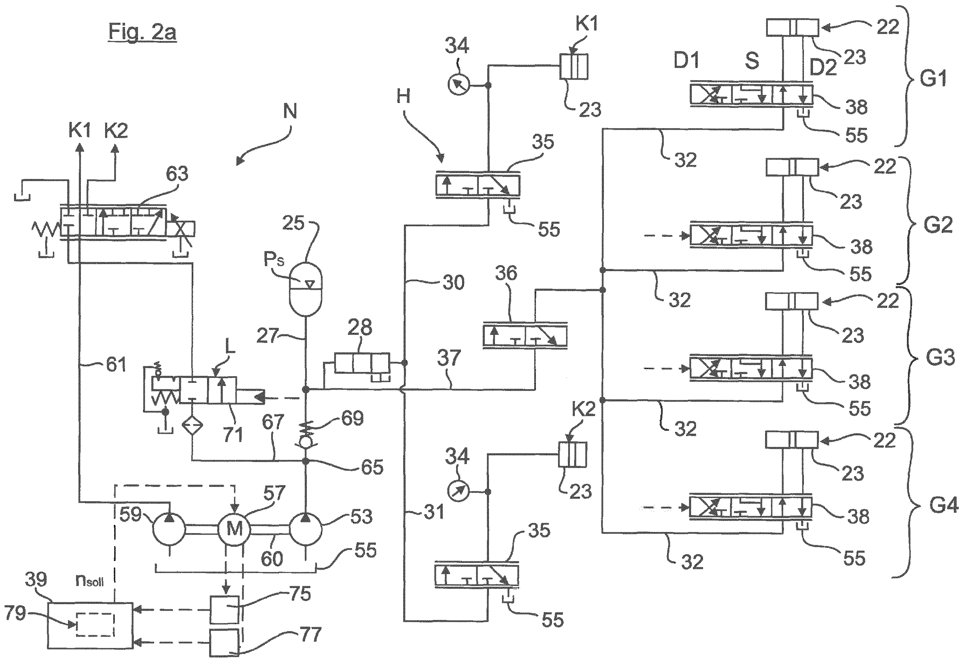

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 22, 23 der Kupplungen K1, K2 sowie der Gangsteller betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 22, 23 der Kupplungen K1, K2 sowie der Gangsteller über einen Druckspeicher 25 mit einem Speicherdruck ps beaufschlagt werden, der in einer Größenordnung von zum Beispiel 30 bar liegen kann. Hierzu ist eine am Druckspeicher 25 angeschlossene Hauptleitung 27 über Kupplungspfäde 30, 31 zu den Kupplungs-Hydraulikzylindern 23 geführt und über Gangstellerpfade 32 zu den Gangsteller-Hydraulikzylindern 22 geführt. In den Gangsteller- und Kupplungspfaden 30, 31, 32 sind jeweils Kupplung-oder Gangstellerventile 35, 38 angeordnet. Die Kupplung- oder Gangstellerventile 35, 38 sind in nicht dargestellter Weise über eine zentrale Steuereinheit 39 ansteuerbar. Zudem ist die Steuereinheit 39 mit Drucksensoren 34 signaltechnisch in Verbindung. Die Drucksensoren 34 erfassen jeweils den an der ersten Kupplung K1 und an der zweiten Kupplung K2 anliegenden Hydraulikdruck.

Das Hydrauliksystem weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

In der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Speicherladeventil 71 integriert. Das Speicherladeventil 71 kann in Abhängigkeit von Höhe des Speicherdruckes ps im Hochdruckkreislauf H zwischen in der Fig. 2a gezeigten Ladestellung L und einer Kühlstellung K verstellt werden.

Der Speicherdruck ps im Hochdruckkreislauf H wirkt als ein Steuerdruck, mit dem das Speicherladeventil 71 ohne zusätzliche Fremdenergie, das heißt selbsttätig, verstellbar ist. Das Speicherladeventil 71 ist dabei so ausgelegt, dass es sich in die Ladestellung L verstellt, sofern der Speicherdruck ps im Hochdruckkreislauf H zum Beispiel einen unteren Schwellwert, zum Beispiel 25 bar, unterschreitet. Außerdem wird das Speicherladeventil 71 selbsttätig in seine Kühlstellung K verschoben, sofern der Speicherdruck ps einen oberen Schwellwert pₘₐₓ, zum Beispiel 28 bar, überschreitet.

Im Fahrbetrieb kommt es durch Betätigungen der Kupplungen K1, K2 sowie der Gangsteller G1 bis G4 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck ps während des Fahrbetriebes reduziert. Für den Fall, dass der Speicherdruck ps den unteren Schwellwert pₘᵢₙ unterschreitet (das heißt es liegt ein Druckspeicher-Ladebedarf vor), verstellt sich das Speicherladeventil 71 selbsttätig in seine Ladestellung L (Fig. 2a).

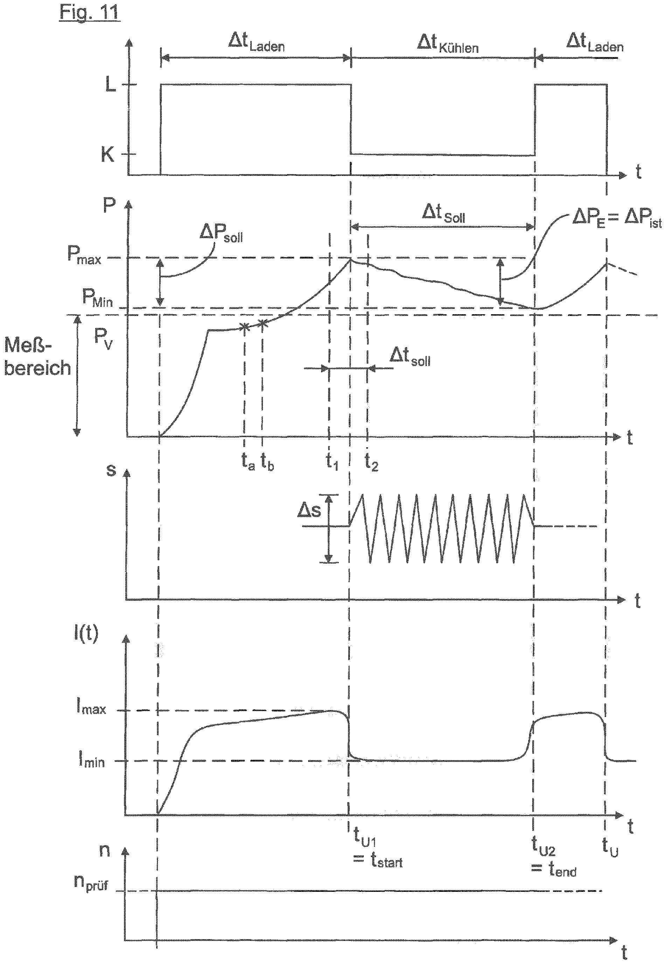

Bei Erkennen des Druckspeicher-Ladebedarfs steuert die Steuereinheit 39 den Elektromotor 57 mit einer Lade-Solldrehzahl an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iₘₐₓ (Fig. 11). Überschreitet der Speicherdruck ps den oberen Schwellwert pₘₐₓ (Fig. 11), das heißt es liegt kein Druckspeicher-Ladebedarf mehr vor, so stellt sich das Speicherladeventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iₘᵢₙ (Fig. 11).

Wie oben erwähnt, steuert die Steuereinheit 39 bei Erkennen eines Druckspeicher-Ladebedarfs den Elektromotor 57 mit einer Lade-Solldrehzahl an. Zum Erkennen eines solchen Druckspeicher-Ladebedarfs ist erfindungsgemäß auf einen Drucksensor im Hochdruckkreislauf H oder einem Lagesensor im Speicherladeventil 71 verzichtet. Anstelle dessen weist die Steuereinheit 39 eine Auswerteeinheit auf. Die Auswerteeinheit ist signaltechnisch in Verbindung mit einer in der Motoransteuerung integrierten Strommesseinrichtung 75, die eine Ist-Stromaufnahme list des Elektromotors 57 erfasst, und mit einem Drehzahlsensor 77, der eine Ist-Drehzahl nᵢₛₜ des Elektromotors 57 erfasst.

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31, 32 verbundenen Ölkammer 26 und einem vorgespannten Druckkolben 27. Die Vorspannung wird hier beispielhaft durch einen Gasdruck erzielt, der am Druckkolben 27 anliegt. Alternativ kann die Vorspannung auch durch eine Feder erzielt werden. Bei vollständig entleerter Ölkammer 26 wird der Druckkolben 27 (in der Fig. 2b in gestrichelter Linie angedeutet) mit einer Vorspannkraft Fv gegen einen Anschlag 29 des Druckspeichers 25 gedrückt. Das heißt, dass bei einem Befüllvorgang zur Überwindung der Vorspannkraft Fv ein Hydraulikdruck anliegt, der größer ist als ein, mit der Vorspannkraft Fv korrelierender Vorspanndruck pv.

In der Fig. 2b ist der Druckspeicher 25 in einem teilbefüllten Zustand gezeigt, bei dem das Hydrauliköl unter Aufbau der Vorspannkraft Fv mit einem Speicherdruck am Druckkolben 27 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31, 32 Umgebungsdruck pu vor. Eine Betriebsbereitschaft des Automatikgetriebes ist dann gegeben, wenn sämtliche Hydraulikleitungen 27, 31, 32 mit Hydrauliköl gefüllt sind und in den Hydraulikleitungen 27, 31, 32 ein Hydraulikdruck anliegt, der größer als der Vorspanndruck pv ist, und zwar um einen vorgegebenen Druckoffset, damit die Betriebsbereitschaft nicht sofort nach Abschaltung der Ladepumpe 53 aufgrund einer Basisleckage wieder verloren geht.

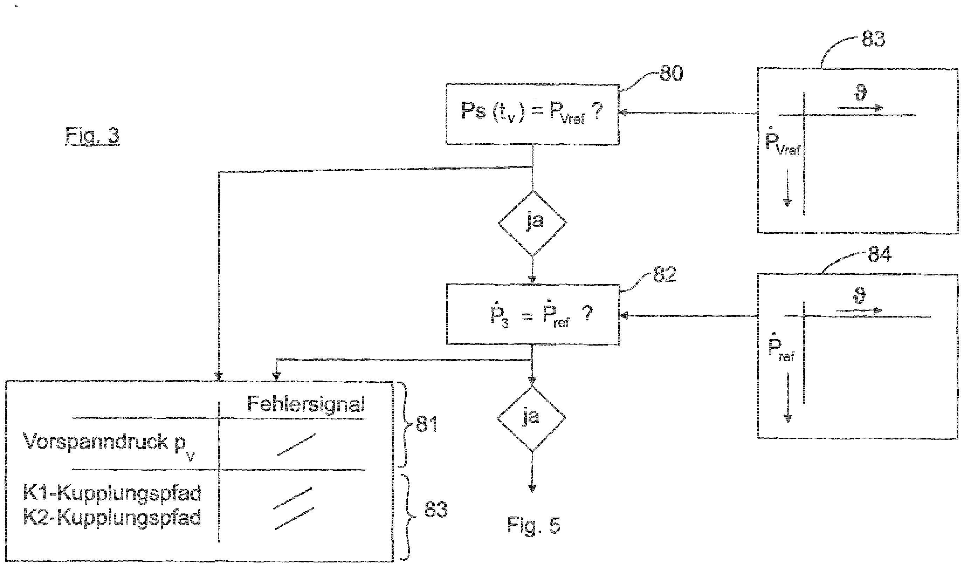

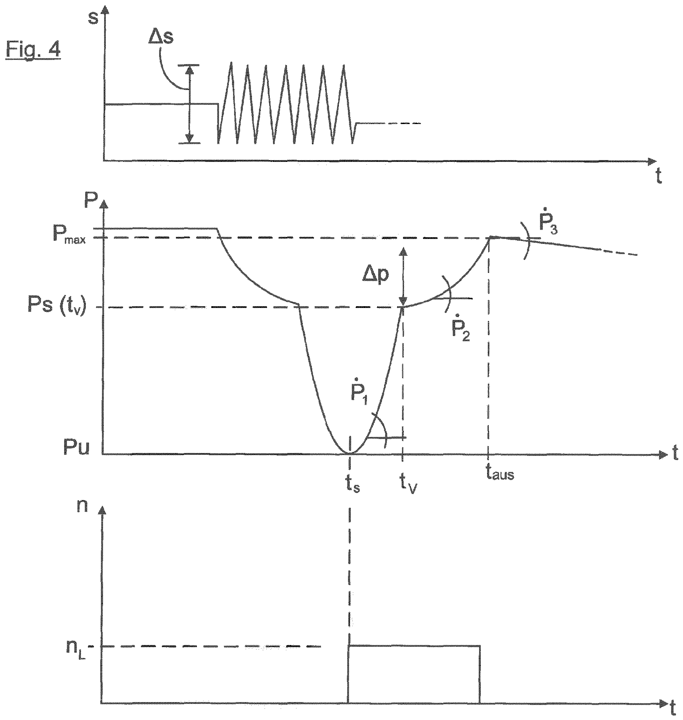

In der Figur 2a weist die Steuereinheit 39 ein Diagnosemodul 79 auf, mit dem das Ladeverhalten prüfbar ist, und zwar insbesondere der Sachverhalt prüfbar ist, ob der tatsächliche Vorspanndruck pv im Druckspeicher 25 mit einem in der Spezifikation angegebenen (d.h. konstruktiv vorgegebenen) Referenz-Vorspanndruck p_{VRef} übereinstimmt. Die hierzu erforderlichen Programmbausteine sind in der Fig. 3 skizziert. Demnach weist das Diagnosemodul 79 eine Auswerteeinheit 80 auf, mit der ein in einem Kennfeld 83 hinterlegter temperaturabhängiger Vorspanndruck p_{VRef} mit einem später beschriebenen Ist-Speicherdruck ps(tv) (Fig. 4) verglichen wird. Der Ist-Speicherdruck ps(tv) wird zu einem später beschriebenen Vorspanndruck-Zeitpunkt tv vom Drucksensor 34 erfasst. Während des Diagnosebetriebs ist das Kupplungsventil 35 in einem der Kupplungspfade 30, 31 dauerhaft geöffnet, während das Kupplungsventil 35 im anderen Kupplungspfad geschlossen ist.

Bei einer einwandfreien Druckspeicher-Funktion stimmt der im Vorspanndruck-Zeitpunkt tv erfasste Ist-Speicherdruck ps(tv) mit dem Referenz-Vorspanndruck p_{VRef} überein. Bei einer signifikanten Vorspanndruck-Abweichung stellt dagegen die Auswerteeinheit 80 einen Vorspanndruck-Fehler fest, der in einem Vorspanndruck-Fehlerspeicher 81 (Fig. 3) hinterlegt wird. Sofern festgestellt ist, dass der Druckspeicher 25 in Ordnung ist, wird mittels einer weiteren Auswerteeinheit 82 (Fig. 3) des Diagnosemoduls 79 eine später beschriebene Kupplungspfad-Diagnose durchgeführt.

Nachfolgend wird die Druckspeicher-Diagnose (d.h. Vorspanndruck-Diagnose) und die Kupplungspfad-Diagnose anhand der Fig. 3 und 4 erläutert: So wird zur Vorbereitung der Druckspeicher-Diagnose die Ölkammer 26 des Druckspeichers 25 vollständig entleert und der Ist-Speicherdruck ps(t) im Hydrauliksystem auf einen Umgebungsdruck pu reduziert, so dass zu einem Diagnose-Startzeitpunkt ts (Fig. 4) die Druckspeicher-Diagnose beginnen kann. Die vorbeschriebene Diagnosestart-Bedingung wird durch eine Betätigung der Hydraulikzylinder 22, 23 der Kupplungen K1, K2 und der Gangsteller G1 bis G4 erzielt, wie es in dem oberen Stellweg-Diagramm der Fig. 4 angedeutet ist. Demzufolge werden die Hydraulikzylinder 22, 23 durch eine Bestromung der jeweiligen Kupplungs- oder Gangstellerventile 35, 38 solange intermittierend angesteuert, bis aufgrund der mit der Hydraulikzylinder-Betätigung verbundenen Hydraulikflüssigkeits-Entnahme der vom Drucksensor 34 erfasste Speicherdruck ps auf den Umgebungsdruck pu reduziert ist. Das Vorliegen eines solchen Umgebungsdruckes pu kann durch den Drucksensor 34 erfasst werden. Alternativ dazu kann durch Positionssensoren 93 in den Hydraulikzylindern 22, 23 ermittelt werden, ob der jeweilige Hydraulikzylinder 22, 23 noch einen Stellweg s (Fig. 4) zurücklegt oder nicht. Falls nicht, wird daraus gefolgert, dass im Hydrauliksystem ein Umgebungsdruck pu vorliegt.

Anschließend startet zum Zeitpunkt ts (Fig. 4) der Diagnose-Ladebetrieb, bei dem die Hydraulik-Ladepumpe 53 mit einer konstanten Lade-Drehzahl n_{L} (Fig. 4, unteres Diagramm) angesteuert wird. Exemplarisch wird zunächst mittels des im ersten Kupplungspfad 31 angeordneten Drucksensors 34 der Ist-Speicherdruckverlauf ps(t) erfasst, wie er in der Fig. 4, mittleres Diagramm wiedergegeben ist. Demzufolge erhöht sich der Speicherdruck ps bis zu dem Vorspanndruck-Zeitpunkt tv, bei dem der vom Drucksensor 34 erfasste Ist-Speicherdruck p_{S}(tᵥ) den Druckspeicher-Vorspanndruck pv erreicht hat.

Wie oben bereits angedeutet, ist bei einer fehlerfreien Druckspeicher-Funktion der im Vorspanndruck-Zeitpunkt tv erfasste Ist-Speicherdruck ps(tv) (unter Berücksichtigung von Temperaturabhängigkeiten) identisch mit einem Referenz-Vorspanndruck p_{VRef}. Bei einer signifikanten Abweichung zwischen dem im Vorspanndruck-Zeitpunkt tv erfassten Ist-Speicherdruck ps(tv) und dem Referenz-Vorspanndruck p_{VRef} stellt die Auswerteeinheit 80 einen Vorspanndruck-Fehler fest. Im weiteren Diagnose-Ladebetrieb wird nach dem Vorspanndruck-Zeitpunkt tv die Ölkammer 26 des Druckspeichers 25 gefüllt, und zwar unter Verstellung des Druckkolbens 27.

Wie aus der Fig. 4, mittleres Diagramm, hervorgeht, steigt im Diagnose-Ladebetrieb der Ist-Speicherdruckverlauf ps(t) bis zum Erreichen des Vorspanndrucks pv im Druckspeicher 25 (d.h. bis zum Vorspanndruck-Zeitpunkt tv) mit einem steilen Druckgradienten P₁ an. Im weiteren Verlauf (d.h. nach dem Vorspanndruck-Zeitpunkt tv) steigt der Ist-Speicherdruckverlauf ps(t) dagegen lediglich mit einem flacheren Druckgradienten ṗ₂ an. Diese für den Druckspeicher 25 charakteristische Ladekurve wird zur Ermittlung des Vorspanndruck-Zeitpunkts t₂ wie folgt genutzt: So erfasst die Auswerteeinheit 80 die Druckgradienten ṗ₁, ṗ₂ des Ist-Speicherdruckverlaufes ps(t). Bei Erfassen einer signifikanten Gradienten-Änderung zwischen den Druckgradienten ṗ₁ und ṗ₂ erkennt die Auswerteeinheit 80 den Vorspanndruck-Zeitpunkt tv.

Sofern in der obigen Vorspanndruck-Diagnose kein Vorspanndruck-Fehler erkannt wird, erfolgt unmittelbar anschließend die Kupplungspfad-Diagnose: Hierzu wird einfach der während der Druckspeicher-Diagnose erfolgende Diagnose-Ladebetrieb fortgesetzt, bis der Drucksensor 34 einen oberen Schwellwert pₘₐₓ (Fig. 4, mittleres Diagramm) erreicht. Der obere Schwellwert pₘₐₓ liegt in der Fig. 4, mittleres Diagramm, um eine Druckdifferenz Δp über dem Vorspanndruck pv des Druckspeichers 25. Nach dem Ende des Diagnose-Ladebetriebs vergleicht eine zweite Auswerteeinheit 82 einen Druckgradienten ṗ₃ des Ist-Speicherdruckverlauf ps(t) mit einem Referenz-Druckgradienten p_{Ref}, der temperaturabhängig in einem Kennfeld 84 (Fig. 3) im Diagnosemodul 79 hinterlegt ist. Die Auswerteeinheit 82 ermittelt aus dem Vergleich, ob ein fehlerfreier oder fehlerbehafteter leckagebedingter Druckabfall im Ist-Speicherdruckverlauf ps(t) vorliegt.

Es ist hervorzuheben, dass die Kupplungspfad-Diagnose nur unter der Bedingung erfolgt, dass die Auswerteeinheit 80 keinen Vorspanndruck-Fehler feststellt. Bei Fehlerfreiheit im Druckspeicher 25 können fehlerhafte Leckagen eindeutig dem Kupplungspfad 31 zugewiesen werden. Sowohl bei der Druckspeicher-Diagnose als auch bei der Kupplungspfad-Diagnose ist das in der Verbindungsleitung 37, die die Hauptleitung 27 mit den Gangstellerpfaden 32 verbindet, angeordnete Druckregelventil 36 geschlossen.

Zur Plausibilisierung des in der Vorspanndruck-/Kupplungspfad-Diagnose erzielten Ergebnisses kann der oben anhand des ersten Kupplungspfads 30 dargelegte Diagnosebetrieb doppelt durchgeführt werden, und zwar im Rahmen einer ersten Teildiagnose A mit Hilfe des im ersten Kupplungspfad 30 angeordneten Drucksensors 34 sowie mit dem im zweiten Kupplungspfad 31 geschlossenen Kupplungsventil 35. Anschließend kann der obige Diagnosebetrieb im Rahmen einer zweiten Teildiagnose B durchgeführt werden, und zwar mit dem im zweiten Kupplungspfad 31 angeordneten Drucksensor 34 und mit dem im ersten Kupplungspfad 30 geschlossenen Kupplungsventil 35.

Das Diagnosemodul 79 kann bei Vorliegen gleicher Fehler sowohl in der ersten Teildiagnose A als auch in der zweiten Teildiagnose B einen Druckspeicher-Fehler erkennen sowie mit großer Wahrscheinlichkeit einen Kupplungspfad-Fehler ausschließen. Bei Vorliegen unterschiedlicher Fehler-Ergebnisse kann das Diagnosemodul 79 einen Leckage-Fehler in einem der beiden Kupplungspfade 30, 31 erkennen.

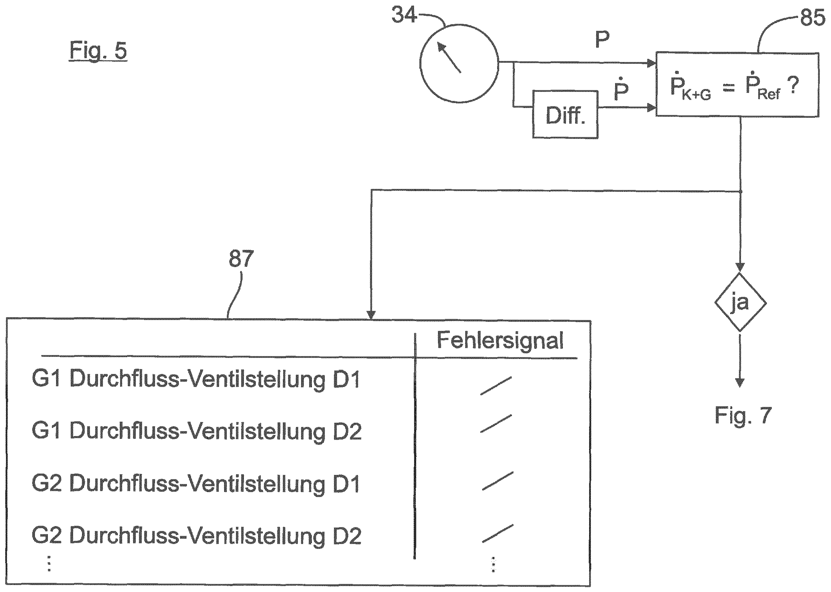

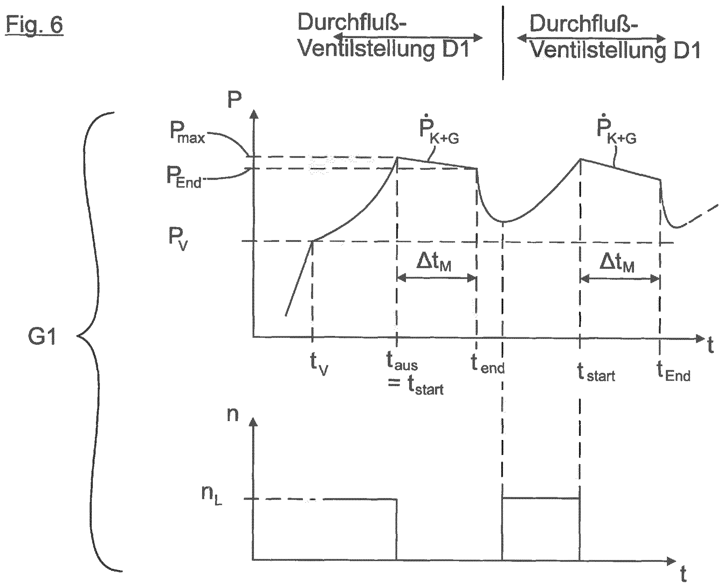

In der Figur 5 sind die für eine Gangstellerpfad-Diagnose erforderlichen Programmbausteine des Diagnosemoduls 79 in einem grob vereinfachten Blockschaltbild gezeigt. Die Gangstellerpfad-Diagnose wird als eine FolgeDiagnose zeitlich unmittelbar nach der Kupplungspfad-Diagnose (Fig. 3) durchgeführt, und zwar unter der Bedingung, dass in der Kupplungspfad-Diagnose zumindest ein Kupplungspfad 30, 31 mit fehlerfreier Leckage erkannt ist. Der Drucksensor 34 des als fehlerfrei eingestuften Kupplungspfades 30, 31 (nachfolgend als Referenz-Kupplungspfad bezeichnet) wird für die anhand der Figuren 5 und 6 veranschaulichte Gangstellerpfad-Diagnose genutzt.

Wie aus der Figur 5 hervorgeht, weist das Diagnosemodul 79 eine dritte Auswerteeinheit 85 auf, an deren Signaleingang ein vom Drucksensor 34 erfasster Ist-Speicherdruck ps(t) und ein Ist-Speicherdruck-Gradient p anliegt. Mittels der Auswerteeinheit 85 wird das Leckage-Verhalten jedes der Gangstellerpfade 32 separat geprüft. Gegebenenfalls erfasste Leckage-Fehler werden in dem Fehlerspeicher 87 hinterlegt.

Nachfolgend wird anhand der Figuren 5 und 6 die Gangstellerpfad-Diagnose beschrieben: So öffnet das Diagnosemodul 79 zunächst das im Referenz-Kupplungspfad 30 angeordnete Kupplungsventil 35, um den Ist-Speicherdruckverlauf ps(t) zu erfassen. Zudem wird das Druckregelventil 36 in der Verbindungsleitung 37 des Hydrauliksystems geöffnet, um zwischen dem im Referenz-Kupplungspfad 30 angeordneten Drucksensor 34 und den Gangstellerpfaden 32 eine Druckverbindung herzustellen. Anschließend erfolgt ein Diagnose-Ladebetrieb durch Aktivierung der Lade-Hydraulikpumpe 53. Im Diagnose-Ladebetrieb wird der Ist-Speicherdruck ps(t) bis auf den oberen Schwellwert pₘₐₓ (Figur 6) zum End-Zeitpunkt tₐᵤₛ erhöht. Nach dem Ende des Diagnose-Ladebetriebs, das heißt zum End-Zeitpunkt tₐᵤₛ (Figur 6), erfasst der Drucksensor 34 während eines Meßzeitintervalls Δt_{M} einen Druckgradienten ṗ_{K+G} des Speicherdruckverlaufes ps(t). Die Auswerteeinheit 85 vergleicht den Druckgradienten ṗ_{K+G} mit einem Referenz-Druckgradienten p_{Ref} und wertet aus, ob ein fehlerfreier oder fehlerbehafteter Druckabfall (das heißt eine Gangsteller-Leckage) im Speicherdruckverlauf ps(t) vorliegt.

Wie in der Figur 2a gezeigt, ist jedes der in den Gangstellerpfaden 32 angeordneten Gangstellerventile 38 zwischen einer Sperr-Ventilstellung S und zwei Durchfluss-Ventilstellungen D1, D2 verstellbar. Die Gangstellerpfad-Diagnose erfolgt im zu prüfenden Gangstellerpfad 32 für jede der Durchfluss-Ventilstellungen D1 und D2 separat. Das heißt, dass in jedem Gangstellerpfad 32 die Gangsteller-Diagnose sowohl in der ersten Durchfluss-Ventilstellung D1 des Gangstellerventils 38 als auch in der zweiten Durchfluss-Ventilstellung D2 des Gangstellerventils 38 durchgeführt wird. Die Gangstellerventile 38 in den verbleibenden Gangstellerpfaden 32 bleiben dagegen in die Sperr-Ventilstellung S geschaltet, um die Meßgenauigkeit bei der Diagnose des zu prüfenden Gangstellerpfads 32 zu erhöhen. Der im Meßzeitintervall Δt_{M} vom Drucksensor 34 erfasste Druckgradient ṗ_{K+G} gibt daher den gemeinsamen Druckabbau sowohl im Referenz-Kupplungspfad 30 als auch im zu prüfenden Gangstellerpfad 32 wieder, dessen Gangstellerventil 38 in eine der beiden Durchflußstellungen D1, D2 geschaltet ist.

Der Referenz-Druckgradient p_{Ref} wird aus einer Kennfeld-Datenbank gelesen, z.B. aus der bereits in der Figur 3 gezeigten Kennfeld-Datenbank 83. In diesem Fall würde der auslesbare Referenz-Druckgradient p_{Ref} einer fehlerfreien Basisleckage des Referenz-Kupplungspfades 30 entsprechen. In der Auswerteeinheit 85 werden nicht nur die Druckgradienten p_{K+G} erfasst, sondern zusätzlich auch Absolut-Druckwerte, das heißt der Ist-Speicherdruck ps(tstart) zum Startzeitpunkt tstart als auch der Ist-Speicherdruck p_{S}(t_{End}) zum Mess-Endzeitpunkt t_{End} des Messzeitintervalls Δt_{M}. In diesem Fall erkennt die Auswerteeinheit 85 einen fehlerfreien Gangstellerpfad 32, wenn die Bedingungen erfüllt sind, dass erstens eine ausreichend große Speicherdruckdifferenz zwischen dem Start- und Endzeitpunkt t_{Start,} t_{End} vorliegt und dass zweitens der Druckgradient ṗ_{K+G} dem Referenz-Druckgradienten p_{Ref} entspricht.

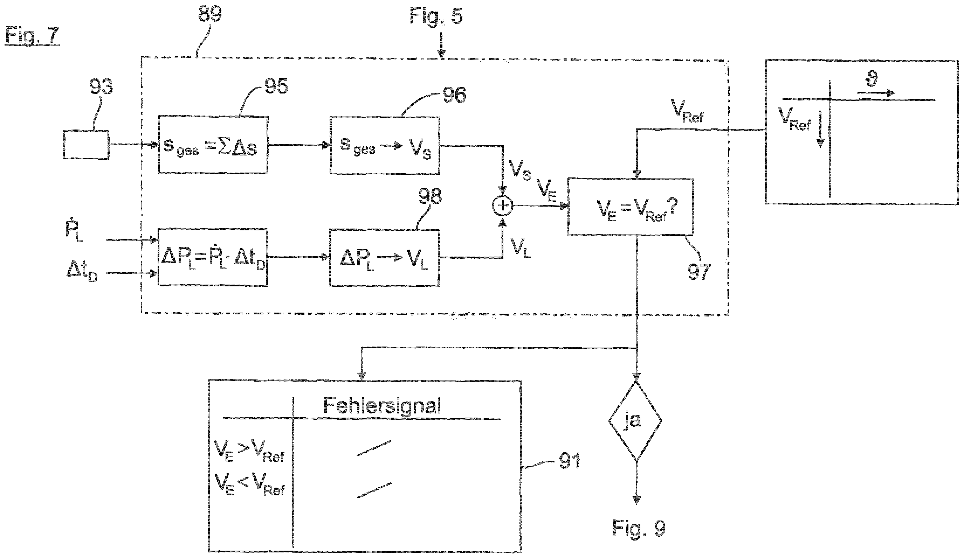

In der Figur 7 sind die für eine Speichervolumen-Diagnose erforderlichen Programmbausteine des Diagnosemoduls 79 in einem grob vereinfachten Blockschaltbild gezeigt. Die Speichervolumen-Diagnose wird als eine FolgeDiagnose zeitlich unmittelbar nach der Gangsteller-Diagnose (Figuren 5 und 6) durchgeführt, und zwar unter der Bedingung, dass in der Gangsteller-Diagnose zumindest ein Gangstellerpfad 32 der Gangsteller G1 bis G4 als fehlerfrei erkannt ist und somit für die Speichervolumen-Diagnose als ein Referenz-Gangstellerpfad nutzbar ist.

Wie aus der Figur 7 hervorgeht, weist das Diagnosemodul 79 eine Auswerteeinheit 89 auf, die in einem Vergleicher-Baustein 97 eine bei der Speichervolumen-Diagnose ermittelte Hydraulikflüssigkeits-Entnahme V_{E} mit einem Referenz-Speichervolumen V_{ref} vergleicht. Bei Vorliegen einer signifikanten Abweichung wird ein Speichervolumen-Fehler erkannt und im Fehlerspeicher 91 abgespeichert. Das Referenz-Speichervolumen V_{ref} ist aus einem Speichervolumen-Kennfeld einer Datenbank auslesbar, in dem die Referenzwerte temperaturabhängig hinterlegt sind.

Wie aus der Figur 7 weiter hervorgeht, ist die Auswerteeinheit 89 in Signalverbindung mit einem Positionssensor 93 des im Referenz-Gangstellerpfad 32 angeordneten Gangsteller-Hydraulikzylinders 22. Während der Speichervolumen-Diagnose wird das Gangstellerventil 38 im Referenz-Gangstellerpfad 32 angesteuert, wobei der Positionssensor 93 die Stellwege Δs des Gangsteller-Hydraulikzylinders 22 erfasst. Diese werden in einem Stellweg-Integrator 95 zu einem Gesamt-Stellweg s_{ges} aufintegriert. Der Gesamt-Stellweg s_{ges} wird in einem Wandler-Baustein 96 in ein Gesamt-Schluckvolumen Vs umgerechnet. Zu dem Gesamt-Schluckvolumen Vs wird ein während der Speichervolumen-Diagnose abfließendes Hydraulikflüssigkeits-Leckagevolumen V_{L} addiert. Die sich daraus ergebende Hydraulikflüssigkeits-Entnahme V_{E} wird zum oben erwähnten Vergleicher-Baustein 97 geleitet.

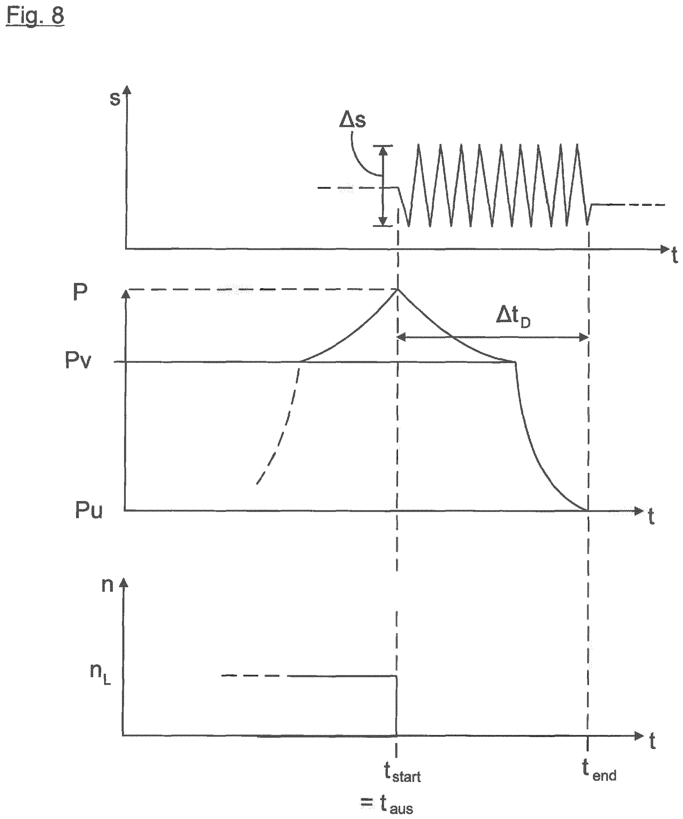

Die Speichervolumen-Diagnose wird wie folgt durchgeführt: Zunächst wird der Druckspeicher 25 in einem Diagnose-Ladebetrieb komplett mit Hydraulikflüssigkeit gefüllt. Der Diagnose-Ladebetrieb ist ein Ladevorgang, der in einer bestimmten Zeit t erfolgt. Anschließend wird ab einem StartZeitpunkt tstart (stimmt in der Fig. 8 mit dem Ausschalt-Zeitpunkt tₐᵤₛ überein) der Referenz-Hydraulikzylinder 22 in einem Diagnose-Zeitintervall Δt_{D} so lange intermittierend betätigt, bis aufgrund der aus dem Hydrauliksystem genommenen Leckage- und Schluckvolumina V_{L} und Vs ein Umgebungsdruck pu im Hydrauliksystem vorliegt. Der Umgebungsdruck pu wird nicht über einen Drucksensor gemessen, sondern indirekt im Diagnosemodul 79 erkannt, und zwar zu dem End-Zeitpunkt t_{end} (Fig. 8) des Diagnose-Zeitintervall Δt_{D}, zu dem der Positionssensor 93 trotz Durchfluss-Ventilstellung D1, D2 des Referenz-Steuerventils 35 keinen Stellweg Δs mehr erfasst.

Während der Druckspeichervolumen-Diagnose ist einer der Kupplungspfade 30, 31 als Referenz-Kupplungspfad sowie der zum Referenz-Hydraulikzylinder 22 führende Referenz-Gangstellerpfad 32 mit dem im Hydrauliksystem vorherrschenden Speicherdruck ps beaufschlagt. Die Hydraulikzylinder 22 der anderen Gangstellerpfade 32 sowie des anderen Kupplungspfads sind dagegen vom Speicherdruck ps entkoppelt.

Die Ermittlung des Leckagevolumens V_{L} kann auf der Grundlage der bei den vorangegangenen Diagnosen erfassten Druckgradienten am Kupplungspfad 30 sowie am Referenz-Gangsteller 22 erfolgen (z.B. der Druckgradient ṗ_{K+G} aus der Gangstellerpfad-Diagnose gemäß den Fig. 5 und 6). Der Druckgradient ṗ_{L} wird in der Auswerteeinheit 89 mit dem Diagnose-Zeitintervall Δt_{D} multipliziert. Die so erhaltene Druckdifferenz Δp_{L} wird in einem Wandler 98 in das Leckagevolumen V_{L} umgewandelt.

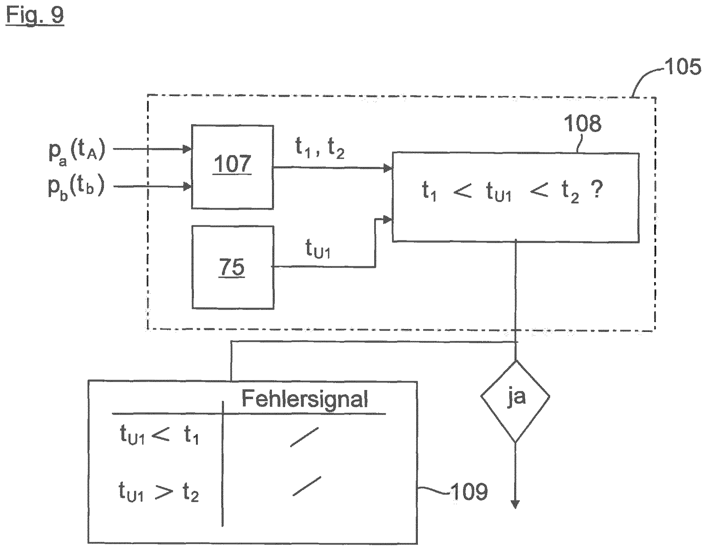

In der Figur 9 sind die für eine Umschaltpunkt-Diagnose am Speicherladeventil 71 erforderlichen Programmbausteine des Diagnosemoduls 79 in einem grob vereinfachten Blockschaltbild gezeigt. Die Umschaltzeitpunkt-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 9 hervorgeht, weist das Diagnosemodul 79 eine Auswerteinheit 105 auf, mit der im Rahmen der Umschaltzeitpunkt-Diagnose geprüft wird, ob ein erster Umschaltzeitpunkt t_{U1}, zu dem das Speicherladeventil 71 selbsttätig von seiner Ladestellung L in seine Nichtladestellung K schaltet, sowie ein zweiter Umschaltzeitpunkt t_{U2}, zu dem das Speicherladeventil 71 selbsttätig von seiner Nichtladestellung K in seine Ladestellung schaltet, plausibel ist. Hierzu ermittelt die Auswerteeinheit 105, ob zum ersten Umschaltzeitpunkt t_{U1} der Ist-Speicherdruck ps(t) im Bereich des oberen Druckschwellwertes pₘₐₓ liegt. Zudem ermittelt die Auswerteeinheit 105, ob zum zweiten Umschaltzeitpunkt t_{U2} der Ist-Speicherdruck ps(t) im Bereich des unteren Druckschwellwerts pₘᵢₙ liegt.

Zur Erfassung der beiden Umschaltzeitpunkte t_{U1} und t_{U2} wird die Strommesseinrichtung 75 des Elektromotors 57 genutzt. Die Strommesseinrichtung 75 erfasst eine Ist-Stromaufnahme I(t) des Elektromotors 57. Dabei legt die Steuereinheit 39 einen Wechsel-Zeitpunkt von einer hohen Stromaufnahme Iₘₐₓ zu einer niedrigen Stromaufnahme Imin als ersten Umschaltzeitpunkt t_{U1} fest. Ein Wechsel-Zeitpunkt von der niedrigen Stromaufnahme Imin zur hohen Stromaufnahme Iₘₐₓ wird als zweiter Umschaltzeitpunkt t_{U2} festgelegt.

Zur Erfassung des Ist-Speicherdruckes ps(t) wird der Kupplungspfad-Drucksensor 34 genutzt. Dessen Messbereich Δpₘₑₛₛ (Figur 11) liegt in der Figur 11 außerhalb, das heißt unterhalb der Druckschwellwerte pₘₐₓ und pₘᵢₙ. Eine unmittelbare Erfassung des Ist-Speicherdruckes ps zu den beiden Umschaltzeitpunkten t_{U1} und t_{U2} ist somit nicht möglich, da der Ist-Speicherdruck zu den beiden Umschaltzeitpunkten außerhalb des Messbereiches Δpₘₑₛₛ liegt.

In der Figur 9 erfolgt die Ermittlung des Ist-Speicherdruckes ps(t) zu den Umschaltzeitpunkten t_{U1} und t_{U2} durch Abschätzung, und zwar mit Hilfe eines Extrapolier-Bausteins 107. Im Extrapolier-Baustein 107 wird auf der Grundlage gemessener Druckwerte pₐ(tₐ) und p_{b}(t_{b}) im SpeicherdruckVerlauf die noch innerhalb des Drucksensor-Messbereiches (Δpₘₑₛₛ) liegen, ein Zeitfenster Δtₛₒₗₗ abgeschätzt. Innerhalb des Zeitfensters Δtₛₒₗₗ liegt bei einwandfreiem Speicherladeventil-Betrieb der erste Umschaltzeitpunkt t_{U1}. Das Zeitfenster Δtₛₒₗₗ wird in der Figur 9 und 11 durch die beiden Zeitpunkte t₁ und t₂ begrenzt. Im nachgeschalteten Vergleicherbaustein 108 wird ermittelt, ob der erste Umschaltzeitpunkt t_{U1} innerhalb oder außerhalb des Zeitfensters Δtₛₒₗₗ liegt. Sofern der erste Umschaltzeitpunkt t_{U1} außerhalb des Zeitfensters Δtₛₒₗₗ liegt, wird ein Fehlerfall erkannt und dieser in dem Fehlerspeicher 109 hinterlegt.

In der Figur 9 ist in den Programmbausteinen lediglich eine Teildiagnose gezeigt, bei der geprüft wird, ob der erste Umschaltzeitpunkt t_{U1} im Zeitfenster Δtₛₒₗₗ liegt oder nicht. In gleicher Weise prüft die Auswerteeinheit 105, ob der zweite Umschaltzeitpunkt t_{U2} innerhalb eines abgeschätzten Zeitfensters liegt oder nicht.

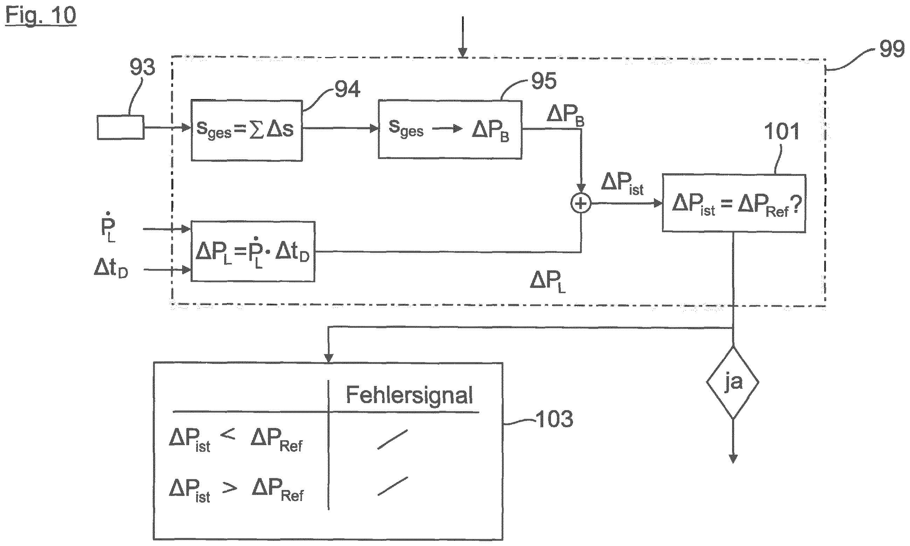

In der Figur 10 sind die für eine Ventilspreizung-Diagnose erforderlichen Programmbausteine des Diagnosemoduls 79 in einem grob vereinfachten Blockschaltbild gezeigt. Die Ventilspreizung-Diagnose wird als eine FolgeDiagnose zeitlich unmittelbar nach der Umschaltzeitpunkt-Diagnose (Figur 9) durchgeführt, und zwar unter der Bedingung, dass in der Umschaltzeitpunkt-Diagnose zumindest ein plausibler Umschaltzeitpunkt t_{U1} des Ladespeicherventils 71 erkannt worden ist.

Das Diagnosemodul 79 weist in der Fig. 10 eine Auswerteeinheit 99 auf, die bei einer Ventilspreizung-Diagnose eine Ist-Ventilspreizung Δpᵢₛₜ zwischen dem unteren und dem oberen Druckschwellwert pₘᵢₙ und pₘₐₓ ermittelt. Ein Vergleicherbaustein 101 der Auswerteeinheit 99 vergleicht die Ist-Ventilspreizung Δpᵢₛₜ mit einer Soll-Ventilspreizung Δp_{Ref}. Bei Vorliegen einer signifikanten Abweichung wird ein Fehlerfall erkannt und in dem Fehlerspeicher 103 hinterlegt.

Zur Ermittlung der Ist-Ventilspreizung Δpᵢₛₜ legt die Auswerteeinheit 99 ein Diagnosezeitintervall Δt_{D} fest. Das Diagnosezeitintervall Δt_{D} startet mit dem ersten Umschaltzeitpunkt t_{U1} und endet mit dem folgenden zweiten Umschaltzeitpunkt t_{U2}. Innerhalb des oben definierten Diagnosezeitintervalls Δt_{D} aktiviert das Diagnosemodul 79 einen Referenz-Hydraulikzylinder 22, der gemäß der Figur 11 während des Diagnosezeitintervalls Δt_{D} permanent, d.h. intermittierend, hin- und her verstellt wird. Durch die Betätigung des Referenz-Hydraulikzylinders 22 und durch eine systemimmanente Hydrauliksystem-Leckage erfolgt während des Diagnosezeitintervalls Δt_{D} eine Speicherdruck-Abnahme Δp_{E}, die der Ist-Ventilspreizung Δpᵢₛₜ entspricht.

Die Ermittlung der Speicherdruck-Abnahme Δp_{E}, das heißt der Ist-Ventilspreizung Δpᵢₛₜ, erfolgt anhand der in der Figur 10 gezeigten Programmbausteine: Demzufolge werden vom Positionssensor 93 die Kolben-Stellwege Δs während des Diagnosezeitintervalls Δt_{D} in einem Integrator 94 zu einem Gesamt-Stellweg s_{ges} aufintegriert. Daraus wird in einem Wandler-Baustein 95 die mit der Gangsteller-Betätigung verbundene Druckabnahme Δp_{B} berechnet. Die mit der Gangsteller-Betätigung verbundene Druckabnahme Δp_{B} wird in einem Summierglied mit der leckagebedingten Druckabnahme Δp_{L} addiert, woraus sich die Speicherdruck-Abnahme Δp_{E} während des Diagnosezeitintervalls Δt_{D} ergibt. Die leckagebedingte Druckabnahme Δp_{L} des Referenz-Hydraulikzylinders 22 ist bereits bei vorangegangenen Diagnosen ermittelt worden.

Wie aus der Figur 2a hervorgeht, ist den beiden Kupplungspfaden 30, 31 ein von der elektronischen Steuereinheit 39 ansteuerbares Sicherheitsventil 28 vorgeschaltet. Das Sicherheitsventil 28 kann zwischen einer Schließstellung und einer Durchflussstellung betätigt werden. In der Schließstellung sind die beiden Kupplungspfade 30, 31 vom Druckspeicher 25 druckentkoppelt. In der Durchflussstellung sind die beiden Kupplungspfade 30, 31 mit dem Speicherdruck ps beaufschlagbar. Sofern die Steuereinheit 39 eine Fehlfunktion des Kupplungsventils 35 in zumindest einem der Kupplungspfade 30, 31 erfasst, kann aus Sicherheitsgründen das Sicherheitsventil 28 in seine Schließstellung verstellt werden. Im normalen Fahrbetrieb ist das Sicherheitsventil 28 permanent in seiner Durchflussstellung.

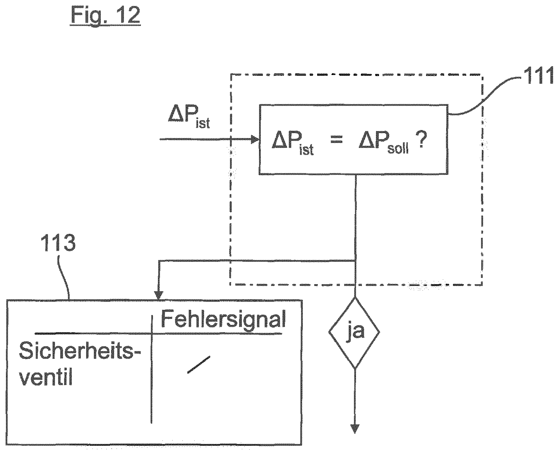

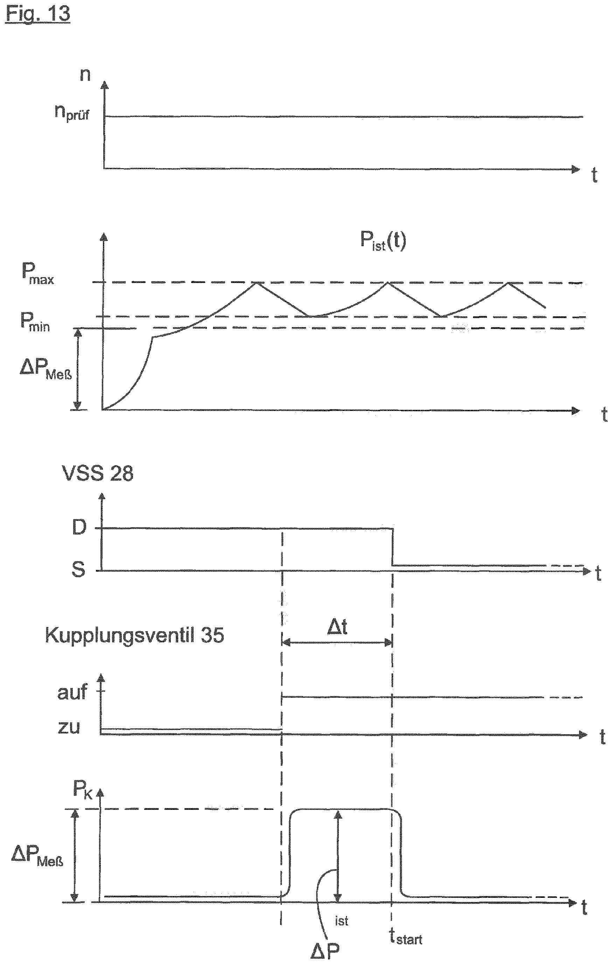

In der Figur 12 sind die für eine Sicherheitsventil-Diagnose erforderlichen Programmbausteine des Diagnosemoduls 79 in einem vereinfachten Blockschaltbild gezeigt. Die Sicherheitsventil-Diagnose kann unabhängig von anderen Diagnoseschritten durchgeführt werden. Bei der Sicherheitsventil-Diagnose wird das Sicherheitsventil 28 zu einem Diagnose-Startzeitpunkt tstart (Figur 13) von der Durchflussstellung in die Schließstellung geschaltet, wodurch sich eine Ist-Druckabnahme Δpᵢₛₜ stromab des Sicherheitsventils 28 einstellt. Das Diagnosemodul 79 weist eine Auswerteeinheit 111 auf, die diese Ist-Druckabnahme Δpᵢₛₜ mit einer Soll-Druckabnahme Δpₛₒₗₗ vergleicht. Bei Vorliegen einer signifikanten Abweichung wird ein Fehlerfall erkannt und in einem Sicherheits-Fehlerspeicher 113 hinterlegt.

Zur Erfassung der Ist-Druckabnahme Δpᵢₛₜ kann der bereits oben erwähnte Kupplungs-Drucksensor 34 genutzt werden.

Nachfolgend wird anhand der Figuren 12 und 13 die Durchführung der Sicherheitsventil-Diagnose erläutert: Für eine einwandfreie Meßgenauigkeit wird die Hydraulikpumpe 53 mit einer Konstantdrehzahl n_{prüf} angesteuert, um im Hochdruckkreislauf H einen ausreichend großen Speicherdruck ps zu gewährleisten, der sich gemäß der Figur 13 zwischen den oberen und unteren Druckschwellwerten pₘₐₓ und pₘᵢₙ bewegt. Das Kupplungsventil 35 eines Referenz-Kupplungspfades 30 oder 31 wird um einen Zeitversatz Δt vor dem oben erwähnten Startzeitpunkt tstart in seine Durchflussstellung verstellt, damit der Drucksensor 34 zwischen dem Kupplungsventil 35 und dem Kupplungs-Hydraulikzylinder 23 die Ist-Druckabnahme Δpᵢₛₜ erfassen kann. Während des Zeitversatzes Δt wird vom Drucksensor 34 nicht der tatsächlich am Kupplungs-Hydraulikzylinder 22 anliegende Hydraulikdruck zur Auswerteeinheit 111 (Fig. 12) ausgelesen, sondern vielmehr ein oberer Grenzdruck des Messbereiches Δpₘₑₛₛ.

Zum Diagnose-Startzeitpunkt tstart wird das Sicherheitsventil 28 von seiner Durchflussstellung D in seine Schließstellung S geschaltet. Die daraus resultierende Druckabnahme pᵢₛₜ wird vom Drucksensor 34 erfasst und in der Auswerteeinheit 111 mit der Soll-Druckabnahme verglichen.

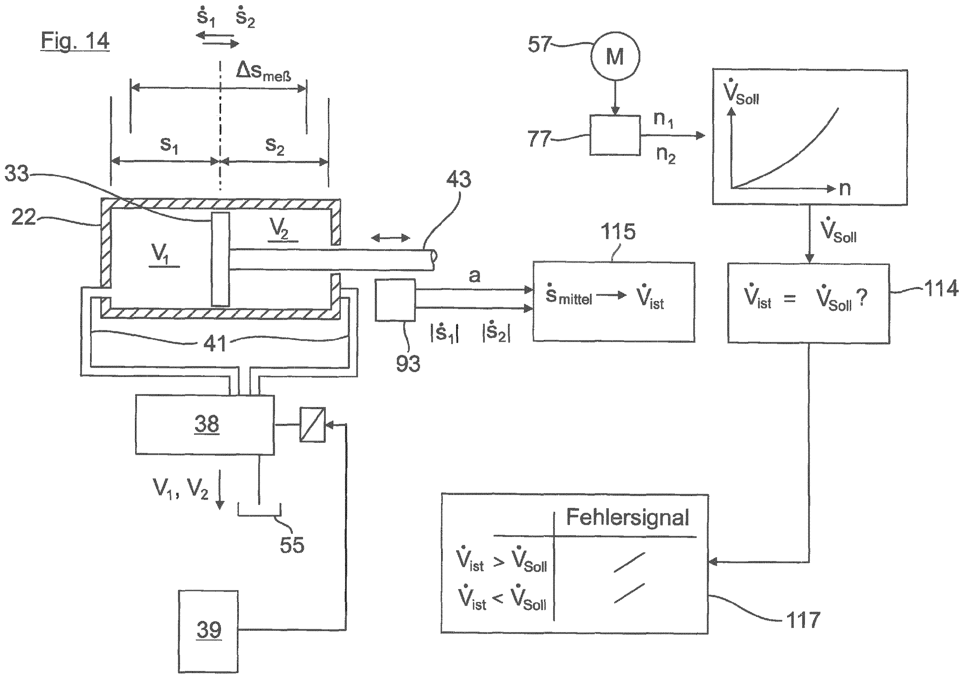

In der Figur 14 sind die für die Fördervolumenstrom-Diagnose erforderlichen Programmbausteine des Diagnosemoduls 79 in einem grob vereinfachten Blockschaltbild gezeigt. Die Fördervolumenstrom-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 14 hervorgeht, wird für die Diagnose ein Gangsteller-Hydraulikzylinder 22 genutzt, der über den Gangsteller 32 mit dem Drucksensor 25 in Verbindung ist. Dem Gangsteller-Hydraulikzylinder 22 ist ein Gangstellerventil 38 vorgelagert, das von der Steuereinheit 39 ansteuerbar ist, um einen am Gangsteller-Hydraulikzylinder 22 anliegenden Hydraulikdruck einzustellen. Das Gangstellerventil 38 ist zwischen zwei Durchflussstellungen D1, D2 verstellbar, um einen Kolben 33 in gegenläufigen Kolbenhüben über die angedeuteten Stellwege s₁, s₂ sowie mit Kolbengeschwindigkeiten s₁, s₂ im Hydraulik-Stellzylinder 22 zu verlagern. Der Kolben 33 unterteilt in der Figur 14 den Hydraulikzylinder in einen kolbenstangenseitigen Arbeitsraum sowie einen davon abgewandten Arbeitsraum, die beide über Hydraulik-Steuerleitungen 41 mit dem Gangstellerventil 38 in Verbindung sind. Mittels der Kolbenstange 43 des Gangsteller-Hydraulikzylinders 22 kann ein nicht gezeigter Gangsteller G1 betätigt werden. Bei einer solchen Gangsteller-Betätigung steuert die elektronische Steuereinheit 39 das Gangstellerventil 38 in an sich bekannter Weise in eine der Durchflussstellungen D1, D2, um eine Kolbenstange-Bewegung zu erzielen. Der Kolbenhub ist mit einer Hydraulikflüssigkeits-Entnahme V₁, V₂ (Schluckvolumen) aus dem Hydrauliksystem verbunden. Aufgrund der bekannten Innengeometrie des Gangsteller-Hydraulikzylinders 22 ist das jeweilige Schluckvolumen V₁, V₂ bekannt. Zudem ist ein Positionssensor 93 vorgesehen, mit dem die Kolbengeschwindigkeit ṡ₁, ṡ₂ im jeweiligen Kolbenhub erfassbar ist.

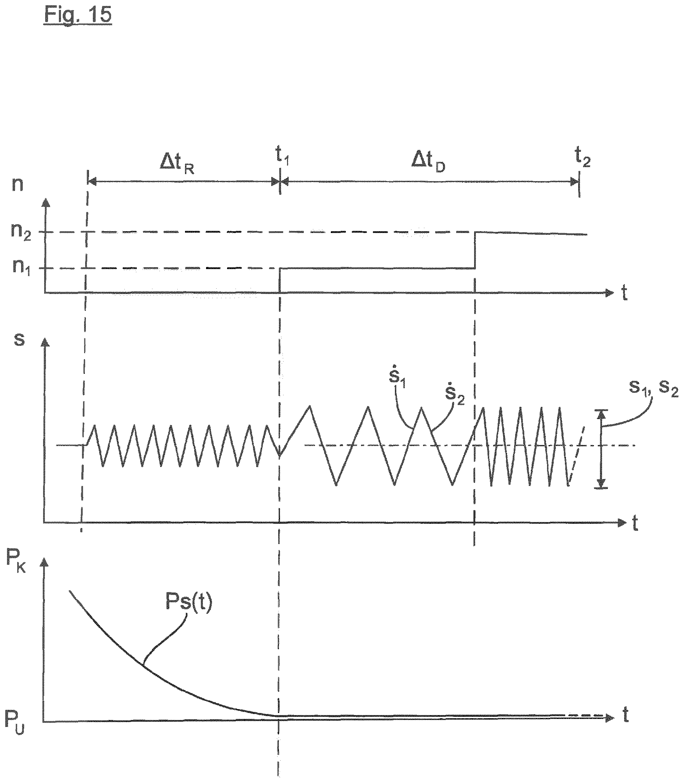

Nachfolgend wird anhand der Figuren 14 und 15 die Fördervolumenstrom-Diagnose beschrieben: So wird zunächst in einem Druckreduzier-Zeitintervall Δt_{R} (Figur 15) zunächst die Hydraulikpumpe 53 deaktiviert und gleichzeitig das Gangstellerventil 38 von der elektronischen Steuereinheit 39 intermittierend angesteuert, wie es in dem mittleren Stellweg-Diagramm der Figur 15 gezeigt ist. Im Druckreduzier-Zeitintervall Δt_{R} wird durch die Ansteuerung vom Gangstellerventil 38 der Gangsteller-Hydraulikzylinder 22 so lange hin- und herbewegt, bis aufgrund von leckagebedingter Hydraulikflüssigkeits-Entnahme und aufgrund betätigungsbedingter Hydraulikflüssigkeits-Entnahme (das heißt Schluckvolumina V₁, V₂) der Speicherdruck ps(t) bis auf den Umgebungsdruck pu reduziert ist. In diesem Zustand ist der Druckspeicher 25 vollständig entleert. Unmittelbar anschließend erfolgt der Start (tstart) eines Diagnosezeitintervalls Δt_{D}. Im Diagnosezeitintervall Δt_{D} erfolgt ein Ladebetrieb der Hydraulikpumpe 53, bei der diese mit unterschiedlichen Prüf-Drehzahlen n₁ und n₂ angesteuert werden. Gleichzeitig wird das Gangstellerventil 38 zwischen seinen Durchflussstellungen D1, D2 intermittierend verstellt. Dies führt dazu, dass sich der Kolben 33 im Gangsteller-Hydraulikzylinder 22 in gegenläufigen Kolbenhüben über Kolbenstellwege s₁, s₂ sowie mit Kolbengeschwindigkeiten ṡ₁, ṡ₂ im Gangsteller-Hydraulikzylinder 22 hin- und herverlagert.

Der Positionssensor 93 erfasst sowohl die einzelnen Stellwege s₁, s₂ je Kolbenhub sowie die Kolbengeschwindigkeiten ṡ₁, ṡ₂ je Kolbenhub. Zudem wird die Anzahl a (Fig. 14) von Kolbenhüben während des Diagnosezeitintervalls Δt_{D} erfasst. Diese Daten werden zum Signaleingang eines Wandler-Bausteins 115 geleitet, in dem eine mittlere Kolbengeschwindigkeit ṡₘᵢₜₜₑₗ aus der Anzahl a von erfassten Kolbenhüben berechnet wird. Aus der mittleren Kolbengeschwindigkeit ṡₘᵢₜₜₑₗ wird im Wandler-Baustein 115 ein Ist-Fördervolumenstrom Vist berechnet. Der Ist-Fördervolumenstrom Vist wird in einer signaltechnisch nachgeschalteten Auswerteeinheit 113 mit einem Soll-Fördervolumenstrom Vₛₒₗₗ verglichen, und zwar unter Berücksichtigungen der jeweiligen Prüf-Drehzahl n₁ und n₂ während des Diagnosezeitintervalls Δt_{D}. Ergibt sich in der Auswerteeinheit 113 eine signifikante Abweichung, so wird ein Fehlerfall erkannt, der in dem Fehlerspeicher 117 hinterlegt wird.

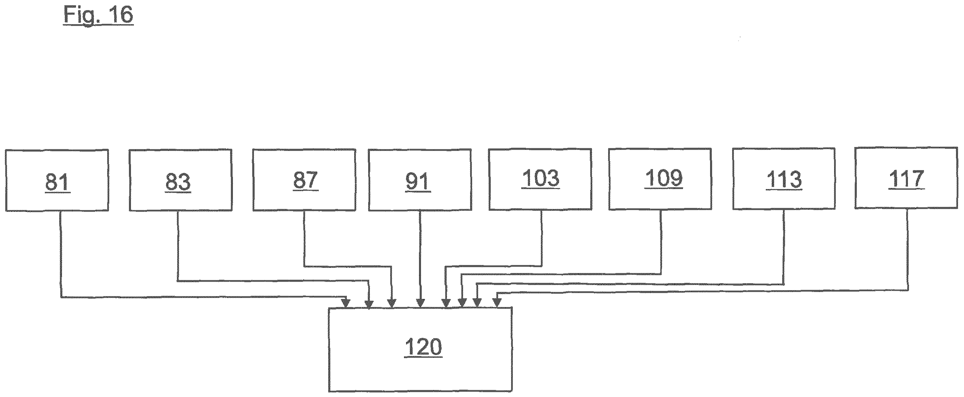

Wie aus der Fig. 16 hervorgeht, sind sämtliche Fehlerspeicher 81, 83, 87, 91, 103, 109, 117 in Signalverbindung mit einer Analyseeinheit 120, in die die in den Fehlerspeichern generierten Fehlersignale auslesbar sind. In der Analyseeinheit 120 ist eine Bewertungsmatrix hinterlegt, in der die Fehlersignale aus den Fehlerspeichern 81, 83, 87, 91, 103, 109, 117 zusammengeführt werden.

Im Hinblick auf eine umfassende Hydrauliksystem-Diagnose bewertet die Analyseeinheit 120 anhand der Bewertungsmatrix sämtliche Fehlersignale in Kombination. In der Analyseeinheit 120 erfolgt somit final eine Gegenüberstellung von Fehlersignalen mit nicht beanstandeten, d.h. fehlerfreien Funktionsdiagnosen, wodurch eine qualifizierte Bewertung der in dem Hydrauliksystem verbauten Komponenten ermöglicht ist. Die Bewertung ist ohne eine Zerlegung des Hydrauliksystems sowie ohne externe Prüfanlagen/Messtechnik ermöglicht. Auf diese Weise wird eine Verkürzung von Reperatur- und Instandsetzungszeiten, eine sichere Detektion defekter Bauteile, eine Reduzierung von Wiederholreparaturen, eine Einsparung von Analyse-Prüfstandskapazitäten durch Prüfung im verbauten Zustand (im Fahrzeug) ohne Zerlegungsaufwand möglich.

## Patentansprüche

1. Hydrauliksystem für ein Automatikgetriebe eines Kraftfahrzeugs, mit einem Hochdruckkreislauf (H), in dem ein Druckspeicher (25), zumindest eine Kupplung (K1, K2) sowie Gangsteller (G1 bis G4) und eine von einer elektronischen Steuereinheit (39) ansteuerbare Hydraulikpumpe (53) angeordnet sind, mittels der in einem Ladebetrieb der Speicherdruck (p_{S}) im Hochdruckkreislauf (H) erhöhbar ist, wobei in einem Kupplungspfad (30, 31) zwischen dem Druckspeicher (25) und einem Kupplungs-Hydraulikzylinder (23) der Kupplung (K1, K2) ein von der Steuereinheit (39) ansteuerbares Kupplungsventil (35) angeordnet ist, mit dem ein am Kupplungs-Hydraulikzylinder (23) anliegender Hydraulikdruck einstellbar ist, und wobei stromauf des Kupplungsventils (35) ein von der Steuereinheit (39) ansteuerbares Sicherheitsventil (24) angeordnet ist, das in einer Schließstellung den Kupplungspfad (30, 31) vom Druckspeicher (25) druckentkoppelt und in einer Durchflussstellung den Kupplungspfad (30, 31) mit dem Speicherdruck (p_{S}) beaufschlagt, **dadurch gekennzeichnet, dass** die Steuereinheit (39) ein Diagnosemodul (79) aufweist, mit dem eine Sicherheitsventil-Diagnose durchführbar ist, bei der das Sicherheitsventil (24) zu einem Diagnose-Startzeitpunkt (tstart) von der Durchflussstellung (D) in die Schließstellung (S) geschaltet wird, und zwar unter Ist-Druckabnahme (Δpᵢₛₜ) stromab des Sicherheitsventils (24), dass eine Auswerteeinheit (111) vorgesehen ist, die die Ist-Druckabnahme (Δpᵢₛₜ) mit einer Soll-Druckabnahme (Δpₛₒₗₗ) vergleicht und bei Vorliegen einer signifikanten Abweichung einen Fehlerfall erkennt, der in einen Sicherheitsventil-Fehlerspeicher (113) auslesbar ist, dass zur Erfassung der Ist-Druckabnahme (Δpᵢₛₜ) der elektronischen Steuereinheit (39) ein Drucksensor (34) zugeordnet ist, mit dem der am Kupplungs-Hydraulikzylinder (23) anliegende Hydraulikdruck erfassbar ist, und der zwischen dem Kupplungsventil (35) und dem Kupplungs-Hydraulikzylinder (23) angeordnet ist, und dass zur Erfassung der Ist-Druckabnahme (Δpᵢₛₜ) um einen Zeitversatz (Δt) vor dem Startzeitpunkt (tstart) das Kupplungsventil (35) in seine Durchflussstellung verstellt wird, damit der Drucksensor (34) die Ist-Druckabnahme (Δpᵢₛₜ) erfassen kann.

2. Hydrauliksystem nachAnspruch 1, **dadurch gekennzeichnet, dass** die Hydraulikpumpe (53) während der Sicherheitsventil-Diagnose bei einer Konstantdrehzahl (n_{prüf}) läuft, um im Hochdruckkreislauf (H) einen ausreichend großen Speicherdruck (p_{S}) zu gewährleisten und Leckagen auszugleichen.

3. Hydrauliksystem nach einem der vorhergehenden Ansprüche,
**dadurch gekennzeichnet, dass** während der Sicherheitsventil-Diagnose Gangsteller-Hydraulikzylinder (22) vom Hochdruckkreislauf (H) druckentkoppelt sind.

4. Hydrauliksystem nach einem der vorhergehenden Ansprüche,
**dadurch gekennzeichnet, dass** der Ist-Speicherdruck (ps(t)) im Hochdruckkreislauf (H) zwischen einem oberen und unteren Druckschwellwert (pₘᵢₙ, pₘₐₓ) geregelt wird, und dass ein Messbereich (Δpₘₑₛₛ) außerhalb, das heißt unterhalb des Ist-Speicherdrucks (ps(t)) liegt, und dass die vom Drucksensor (34) erfassbare Ist-Druckabnahme (Δpᵢₛₜ) bis auf den Umgebungsdruck (p_{U}) dem Drucksensor-Messbereich (Δpₘₑₛₛ) entspricht.

## Claims

1. Hydraulic system for an automatic gearbox of a motor vehicle, having a high-pressure circuit (H), in which a pressure accumulator (25), at least one clutch (K1, K2) as well as gear actuators (G1 to G4) and a hydraulic pump (53) which can be actuated by an electronic control unit (39) are arranged, by means of which the accumulator pressure (pₛ) in the high-pressure circuit (H) can be increased in a charging mode, wherein in a clutch path (30, 31) between the pressure accumulator (25) and a clutch hydraulic cylinder (23) of the clutch (K1, K2) a clutch valve (35) actuated by the control unit (39) is arranged, by means of which clutch valve a hydraulic pressure applied to the clutch hydraulic cylinder (23) can be set, and wherein a safety valve (24) which can be actuated by the control unit (39) is arranged upstream of the clutch valve (35), which safety valve in a closed position pressure-decouples the clutch path (30, 31) from the pressure accumulator (25) and in a flow position applies accumulator pressure (pₛ) to the clutch path (30, 31), **characterised in that** the control unit (39) has a diagnosis module (79) by which a safety valve diagnosis can be carried out, in which the safety valve (24) is switched from the flow position (D) to the closed position (S) at a diagnosis start time (tₛₜₐᵣₜ), and namely with an actual pressure decrease (Δp_{act}) downstream of the safety valve (24), **in that** an evaluation unit (111) is provided which compares the actual pressure decrease (Δp_{act}) with a setpoint pressure decrease (Δpₛₑₜ) and if there is a significant deviation detects a fault which can be read out in a safety valve fault memory (113), **in that** in order to detect the actual pressure decrease (Δp_{act}) the electronic control unit (39) is assigned a pressure sensor (34) with which the hydraulic pressure applied to the clutch hydraulic cylinder (23) can be detected and which is arranged between the clutch valve (35) and the clutch hydraulic cylinder (23) and **in that** in order to detect the actual pressure decrease (Δp_{act}) the clutch valve (35) is adjusted into its flow position by a time offset (Δt) before the starting time (tₛₜₐᵣₜ) so that the pressure sensor (34) can detect the actual pressure decrease (Δp_{act}).

2. Hydraulic system according to claim 1, **characterised in that** the hydraulic pump (53) runs at a constant speed (nₜₑₛₜ) during the safety valve diagnosis, in order to ensure a sufficiently high accumulator pressure (pₛ) in the high-pressure circuit (H) and to compensate for leaks.

3. Hydraulic system according to any of the preceding claims, **characterised in that** during the safety valve diagnosis gear actuator-hydraulic cylinders (22) are pressure-decoupled from the high-pressure circuit (H).

4. Hydraulic system according to any of the preceding claims, **characterised in that** the actual accumulator pressure (pₛ(t)) in the high-pressure circuit (H) is regulated between an upper and lower pressure threshold (pₘᵢₙ, pₘₐₓ), and **in that** a measuring range (Δpₘₑₐₛ) lies outside, i.e. below, the actual accumulator pressure (pₛ(t)), and **in that** the actual pressure decrease (Δp_{act}) detectable by the pressure sensor (34) down to ambient pressure (pᵤ) corresponds to the pressure sensor measuring range (Δpₘₑₐₛ).

## Revendications

1. Système hydraulique pour une transmission automatique d'un véhicule automobile, avec un circuit à haute pression (H), dans lequel un accumulateur de pression (25), au moins un embrayage (K1, K2) ainsi que des sélecteurs de vitesse (G1 à G4) et une pompe hydraulique (53) commandable par une unité de commande (39) électronique sont agencés, au moyen de laquelle pompe dans un mode de charge, la pression d'accumulation (pₛ) peut être augmentée dans le circuit à haute pression (H), dans lequel une soupape d'embrayage (35) commandable par l'unité de commande (39) est agencée dans un chemin d'embrayage (30, 31) entre l'accumulateur de pression (25) et un vérin hydraulique d'embrayage (23) de l'embrayage (K1, K2), avec laquelle soupape une pression hydraulique appliquée sur le vérin hydraulique d'embrayage (23) est réglable, et dans lequel en amont de la soupape d'embrayage (35), une soupape de sécurité (24) commandable par l'unité de commande (39) est agencée, laquelle découple en pression dans une position de fermeture le chemin d'embrayage (30, 31) de l'accumulateur de pression (25) et dans une position d'écoulement sollicite le chemin d'embrayage (30, 31) avec la pression d'accumulation (pₛ), **caractérisé en ce que** l'unité de commande (39) présente un module de diagnostic (79), avec lequel un diagnostic de soupape de sécurité peut être réalisé, pour lequel la soupape de sécurité (24) est commutée à un moment de démarrage de diagnostic (tₛₜₐᵣₜ) de la position d'écoulement (D) jusque dans la position de fermeture (S), et ce sous baisse de pression réelle (Δpᵢₛₜ) en aval de la soupape de sécurité (24), qu'une unité d'évaluation (111) est prévue, laquelle compare la baisse de pression réelle (Δpᵢₛₜ) avec une baisse de pression de consigne (Δpₛₒₗₗ) et reconnaît en présence d'un écart significatif un cas d'erreur qui peut être lu dans une mémoire d'erreurs de soupape de sécurité (113), que pour la détection de la baisse de pression réelle (Δpᵢₛₜ), un capteur de pression (34) est associé à l'unité de commande (39) électronique, avec lequel la pression hydraulique appliquée au vérin hydraulique d'embrayage (23) peut être détectée, et qui est agencé entre la soupape d'embrayage (35) et le vérin hydraulique d'embrayage (23), et que pour la détection de la baisse de pression réelle (Δpᵢₛₜ), la soupape d'embrayage (35) est réglée d'un déport temporel (Δt) avant le moment de démarrage (tₛₜₐᵣₜ) dans sa position d'écoulement, afin que le capteur de pression (34) puisse détecter la baisse de pression réelle (Δpᵢₛₜ).

2. Système hydraulique selon la revendication 1, **caractérisé en ce que** la pompe hydraulique (53) tourne pendant le diagnostic de soupape de sécurité à une vitesse de rotation constante (n_{Prüf}) afin de garantir dans le circuit à haute pression (H) une pression d'accumulation suffisamment grande (pₛ) et de compenser des fuites.

3. Système hydraulique selon l'une quelconque des revendications précédentes, **caractérisé en ce que** pendant le diagnostic de soupape de sécurité, des vérins hydrauliques de sélecteur de vitesse (22) sont découplés en pression du circuit à haute pression (H).

4. Système hydraulique selon l'une quelconque des revendications précédentes, **caractérisé en ce que** la pression d'accumulation réelle (pₛ(t)) dans le circuit à haute pression (H) est régulée entre une valeur seuil de pression (pₘᵢₙ, pₘₐₓ) supérieure et inférieure, et qu'une plage de mesure (Δpₘₑₛₛ) se situe en dehors, c'est-à-dire en dessous de la pression d'accumulation réelle (pₛ(t)), et que la baisse de pression réelle (Δpᵢₛₜ) détectable par le capteur de pression (34) correspond jusqu'à la pression ambiante (pᵤ) à la plage de mesure de capteur de pression (Δpₘₑₛₛ).
